(19) Europäisches Patentamt
European Patent Office
Office européen des brevets

(11) **EP 2 019 461 A1**

(12) **EUROPÄISCHE PATENTANMELDUNG**

(43) Veröffentlichungstag:
**28.01.2009 Patentblatt 2009/05**

(51) Int Cl.:
*H01S 3/00* (2006.01)    *H01S 3/131* (2006.01)
*H01S 3/0941* (2006.01)    *H01S 3/102* (2006.01)

(21) Anmeldenummer: **07112992.8**

(22) Anmeldetag: **24.07.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK RS**

(71) Anmelder: **High Q Laser Production GmbH**
**6845 Hohenems (AT)**

(72) Erfinder:
• **Lederer, Maximilian Josef**
  **A-6861 Alberschwende (AT)**
• **Calendron, Anne-Laure**
  **A-6845 Hohenems (AT)**

(74) Vertreter: **Harmann, Bernd-Günther**
**Büchel, Kaminski & Partner**
**Patentanwälte Est.**
**Austrasse 79**
**9490 Vaduz (LI)**

(54) **Detektion von Mehrfachpulsen in einem LD-gepumpten Solitonlaser**

(57) In einem Erkennungsverfahren für Doppel- oder Mehrfachpulszustände in einem im Solitonenregime betriebenen Ultrakurzpulslasersystem zur Erzeugung von Femto- oder Pikosekundenpulsen mit einem verstärkenden Lasermedium zur Erzeugung einer Laseremission, einem Laserresonator (10) mit mindestens einem Resonatorspiegel und einer Pumpquelle (9) wird für die Laseremission ein erstes Signal μ einer Pulsdurchschnittsleistung oder Pulsenergie für einen oder mehrere Pulse gemessen. Dabei wird für die Laseremission ein zweites Signal ν einer Pulsspitzenleistung oder Pulsspitzenintensität für einen oder mehrere Pulse gemessen und das Auftreten eines Doppel- oder Mehrfachpulszustands anhand eines Vergleichs der gemessenen Signale μ und ν erkannt. Dazu wird ein Teil der Laseremission auf einen ersten Detektor (13) zur Messung der Pulscursie gelenkt und ein anderer Teil auf einen zweiten Detektor (14) zur Messung der Pulsspitzenintensität mittels Zwei- oder Multiphotonen-Absorption.

*Fig. 5*

## Beschreibung

Die Erfindung betrifft ein Erkennungsverfahren für Doppel-oder Mehrfachpulszustände in einem Ultrakurzpulslasersystem nach dem Oberbegriff des Anspruchs 1, ein Verfahren zur Vermeidung von Multipuls-Zuständen und Optimierung des Laser-Arbeitspunktes in einem solchen Ultrakurzpulslasersystem, eine Messvorrichtung zur Erkennung von Doppel- oder Mehrfachpulszustände nach dem Oberbegriff des Anspruchs 9 und ein Ultrakurzpulslasersystem.

Ultrakurzpulslasersysteme, d.h. Lasersysteme zur Erzeugung von Laserpulsen mit Pulsdauern in Femto- oder Pikosekundenbereich sind seit langem im Stand der Technik bekannt. Ein Ansatz zur Erzeugung entsprechender Pulscharakteristiken ist der modengekoppelte Betrieb im Solitonenregime, wobei Einzel- oder Mehrfachpulse pro Resonatorumlauf erzeugt werden können. Diese Betriebszustände hängen sowohl von der Dispersion und Selbstphasenmodulation - und somit der instantanen Pulsintensität - im Resonator ab, als auch von der Modulationstiefe des Modenkopplungs-Mechanismus, der verfügbaren Gain-Bandbreite und anderen Filtereffekten. Die Kombination der genannten Effekte in einem theoretischen Modell lässt es zu, die Übergänge zwischen den Betriebszuständen, zumindest unter der Annahme der adiabatischen Pulsevolution als "Master-Equation approach", vorherzubestimmen. Eine Beschreibung und Modellierung der Verhältnisse erfolgt beispielsweise in J. Opt. Soc. Am. 16 (1999), Seiten 895 - 904. Jedoch lassen sich vor allem Laser mit langen Resonatoren schlecht mit dem oben genannten Ansatz beschreiben. Die diskrete Natur der Einwirkung oben genannter Effekte auf die Pulsformung kommt hier stärker zur Geltung, was sich wiederum auf die erzielbaren Pulsparameter, wie Energie und Pulsbreite, sowie die Übergänge zwischen verschiedenen Betriebszuständen, d.h. den Einzel- oder Mehrfachpulszustand, auswirkt.

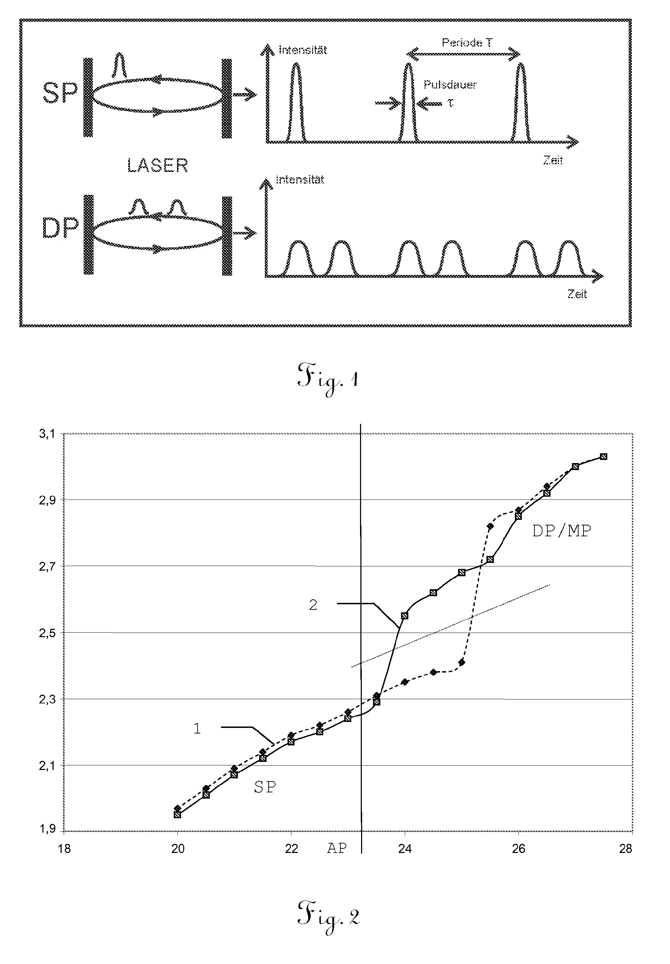

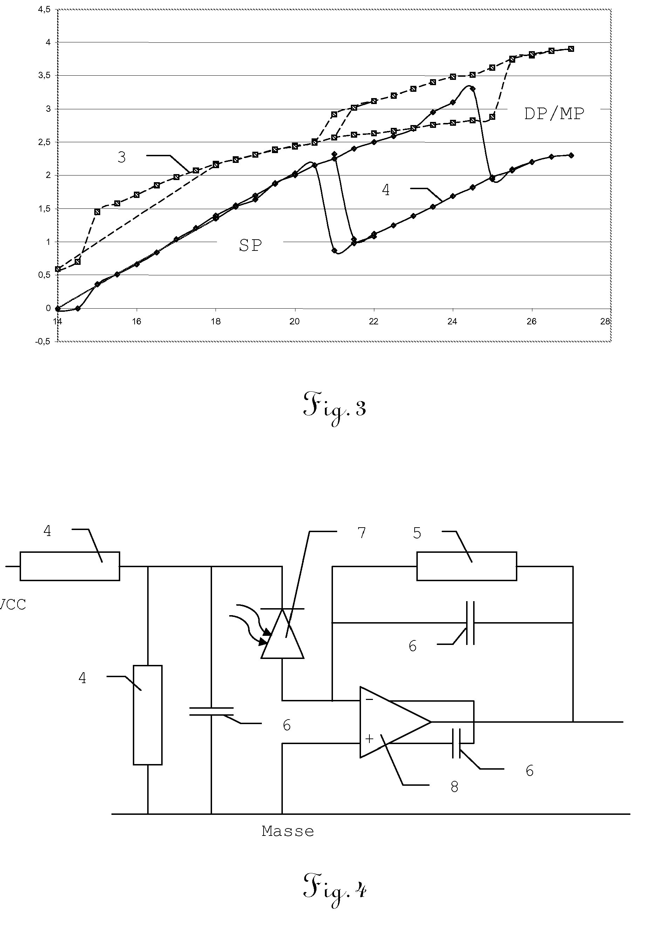

Ein typisches Verhalten eines Solitonlasers, welcher vom Einzelpuls- in den Doppelpulsbetrieb übergeht, besteht z. B. darin, dass sich bei den einzelnen Pulsen innerhalb des Resonatorumlaufs die Energie ungefähr halbiert und die Pulsbreite etwa verdoppelt. Die Übergänge zwischen den Pulszuständen zeigen auch typischerweise das in den Figuren 2 und 3 dargestellte Hystereseverhalten.

Die meisten Anwendungen von Ultrakurzpuls-Lasern benötigen jedoch den Einzelpulsbetrieb, da hier Pulsenergie und Pulsdauer optimal sind. Diese Laser haben somit im Gegensatz zu typischen Nicht-Solitonen-Lasern einen idealen Arbeitspunkt, bestenfalls einen relativ engen Arbeitsbereich, welcher nicht nur von gain-dynamischen Gesichtspunkten (gütegeschaltete Modenkopplung etc.) diktiert wird. Da in der Anwendung typischerweise auch die grösstmögliche Energie und kürzestmögliche Pulsbreite gefordert wird, muss der Arbeitspunkt des Lasers zwangsläufig sehr nahe an die Hysterese Einzel-Doppelpulszustand gelegt werden. Folglich kann der Arbeitspunkt des Lasers schon durch geringfügige Laserparameteränderungen, welche nach industrieüblichen Laufzeiten von mehr als 1000h auftreten können, in den Bereich der Einzel-Doppelpuls-Hysterese verschoben werden. Dies resultiert wiederum in einer finiten Wahrscheinlichkeit, dass der Laser nach dem Einschalten Doppelpulse emittiert.

Für die Industrietauglichkeit von Ultrakurzpuls-Lasern ist es daher sehr wichtig, einen verlässliche Indikator für den Pulszustand zu haben, um evtl. entsprechende Massnahmen zur Vermeidung oder Beseitigung des Doppel- oder Mehrpulszustandes einzuleiten.

Aus dem Stand der Technik sind zwei relativ aufwendige Ansätze zur Erkennung von Doppelpulsen in einem Laser bekannt. Einerseits können mittels Autokorrelation Pulse mit Separation von bis zu 100ps erkannt werden. Autokorrelatoren mit den dafür nötigen Verzögerungen sind dabei im Handel erhältlich, jedoch ist die Methode der Autokorrelation aufwendig und geräteseitig anspruchsvoll. Der andere Ansatz beruht darauf, dass Pulse mit grösserer Separation mittels sehr schneller Photodioden und Oszilloskopen detektiert werden. Auch hier sind der Aufwand und die geräteseitigen Anforderungen hoch.

Damit liegt der Erfindung die Aufgabe zugrunde, ein vereinfachtes und/oder verbessertes Verfahren bzw. eine entsprechende Vorrichtung zur Erkennung und Unterscheidung von Einzel- und Doppel- oder Mehrfachpulszuständen in einem Ultrakurzpulslaser bereitzustellen.

Eine weitere Aufgabe liegt in der Bereitstellung eines Verfahrens zur Vermeidung von Multipuls-Zuständen und zur Optimierung des Laser-Arbeitspunktes.

Eine weitere Aufgabe liegt in der Bereitstellung eines hinsichtlich des Arbeitspunktes optimierten Ultrakurzpulslasersystems.

Diese Aufgaben werden erfindungsgemäss durch Ausführungsformen mit den Merkmalen der Ansprüche 1, 9 oder 15 oder der Merkmale von abhängigen Ansprüchen gelöst bzw. diese Lösungen weitergebildet.

Die Erfindung basiert auf einer Verwendung von Signalen zweier Detektoren, aus denen auf den Betriebszustand des Lasers geschlossen wird. Hierbei wird der Umstand genutzt, daß sich sowohl der Verlauf der instantanen Pulsleistung P(t) als auch deren Scheitelwert für den Ein- und Mehrpulszustand unterscheiden, wobei sich die Scheitelwertleistung $\hat{P}$ dabei aus gemittelter Leistung $\langle P \rangle$ bzw. Energie $E = \int_{-\infty}^{\infty} P(t)\,dt$ , Wiederholfrequenz $f_{rep}$ und Puls-

dauer $\tau_{FWHM}$ gemäß $\hat{P} = \dfrac{\langle P \rangle \cdot 0.89}{\tau_{FWHM} f_{rep}} = \dfrac{E \cdot 0.89}{\tau_{FWHM}}$ ergibt. So wird nun durch den einen Detektor ein Durchschnittswert entsprechend der Gesamtenergie im Resonator, d.h. ein Integral über den Pulsverlauf aufgenommen, wohingegen das Signal des anderen Detektors auf die Spitzenintensität oder Spitzenleistung (Scheitelwert) reagiert. Aus dem Signalverhältnis kann auf den Betriebszustand bzw. das Auftreten des Doppel- oder Multipulszustandes geschlossen werden.

Im Solitonen-Laser gilt über einen weiten Arbeitsbereich die aus der Lösung der nichtlinearen Schrödingergleichung resultierende Beziehung zwischen den Parametern Energie E, Dispersion $\beta_2$, Selbstphasenmodulations-Parameter $\kappa$ und Pulsbreite $\tau_{FWHM}$ eines Solitons 1. Ordnung:

$$\tau_{FWHM} = \frac{3.526 \cdot |\beta_2|}{\kappa \cdot E} \qquad\qquad (1)$$

was beispielsweise in G. P. Agrawal, "Nonlinear Fiber Optics", Academic Press, 1989, Seite 114 dargestellt wird.

Es liegt also eine indirekte Proportionalität zwischen Pulsbreite und -energie vor. Dabei ist zu beachten, dass die Beziehung sowohl für Einzel- als auch für Multipulse gilt. Bei gleichbleibendem Gain-Sättigungsgrad, und somit gleichbleibender Gesamtenergie pro Umlauf, würde also ein Übergang vom Einzel- zum Doppelpulsregime dazu führen, dass die Einzelkomponenten des Doppelpulszustandes jeweils die halbe Energie und die doppelte Pulsbreite des Einzelpulszustandes haben. Jedoch ist zu beachten, dass sich der Gain-Sättigungsgrad bei Übergängen wegen einer Verlagerung der dynamischen Verluste im Resonator, wie in J. Opt. Soc. Am. 16 (1999), Seiten 895 - 904 dargestellt, leicht ändert, was zu einer Hysterese führt, wobei die Extraktion im Doppelpuls-Zustand effizienter ist.

Das erfindungsgemässe Erkennungsverfahren für Doppel- oder Mehrfachpulszustände in einem Ultrakurzpulslasersystem und die zugehörige Erkennungsanordnung werden nachfolgend anhand von in der Zeichnung schematisch dargestellten Ausführungsbeispielen rein beispielhaft näher beschrieben. Im einzelnen zeigen

Fig.1    die schematische Darstellung des Einzel- und Doppelpulsregimes in einem Solitonenlaser;

Fig.2    die Darstellung des Hysteresezyklus beim Übergang zwischen den Einzel- und Doppelpulsregimes;

Fig.3    die Darstellung von Einzel- und Doppelpulszustand mit Hysteresezyklen für Ein- und Zwei- Photonendetektion;

Fig.4    die schematische Darstellung einer Verstärkerschaltung zur Zwei-Photonen-Detektion;

Fig.5    eine erste Ausführungsform einer erfindungsgemässen Anordnung mit zwei Laserdetek- toren;

Fig.6    eine zweite Ausführungsform einer erfindungsgemässen Anordnung mit zwei Laserdetek- toren;

Fig.7    eine erste alternative oder ergänzende Ausführungsform zur erfindungsgemässen Anordnung mit einem sättigbarem Absorber;

Fig.8    die schematische Darstellung der Transmission durch einen schnellen sättigbaren Absorber und

Fig.9a-b   eine zweite alternative oder ergänzende Ausführungsform zur erfindungsgemässen Anordnung mit spektraler Pulsanalyse.

Fig.1 veranschaulicht die Einzel- und Doppelpulsregimes in einem Solitonenlaser in schematischer Darstellung. Ultrakurzpulslasersysteme zur Erzeugung von Femto- oder Pikosekundenpulsen weisen ein verstärkendes Lasermedium zur Erzeugung einer Laseremission, einen Laserresonator mit mindestens einem Resonatorspiegel eine Pumpquelle, wie z.B. eine Laserdiodenanordnung, zum Pumpen des Lasermediums auf. Das Ultrakurzpulslasersystem wird im Solitonenregime betrieben, wobei für die Laseremission ein erstes Signal $\mu$ einer Pulsdurchschnittsleistung, instantanen Leistung oder Pulsenergie, z.B. mittels einer im Ein-Photon-Absorptions-Regime betriebenen Photodiode, für einen oder mehrere Pulse gemessen werden kann.

Im Einzelpulszustand SP läuft ein einzelner Puls innerhalb des Resonators um, wobei die Pulse einen zeitlichen Abstand T haben, was der Resonatorumlaufzeit entspricht. Beim Auftreten des Doppel- bzw. Mehrfachpulszustandes zerfällt der einzelne Puls in zwei oder mehr zeitlich separierte Pulse, wobei diese bei der Extraktion eine niedrigere Intensität bei typischerweise etwas höherer Gesamtenergie aufweisen als der Einzelpuls. Dies bedeutet, dass sich bei den einzelnen Pulsen innerhalb des Resonatorumlaufs die Energie ungefähr halbiert und die Pulsbreite etwa verdoppelt. Diese Charakteristik wird erfindungsgemäß zur Unterscheidung der beiden Zustände genutzt, indem ein für die Intensität sensitiver Detektor mit einem für die Gesamtenergie sensitiven Detektor kombiniert wird. Anhand der detektierten Signale für Intensität und Gesamtenergie bzw. deren Verhältnis kann eine Unterscheidung des Zustands erfolgen.

In Fig.2 wird der Hysteresezyklus beim Übergang zwischen den Einzel- und Doppelpulsregimes für ein erstes Signal $\mu$ dargestellt. Hierbei bezeichnet die horizontale Achse die Intensität des Pumplichtes und damit der in das verstärkende Lasermedium eingekoppelten Leistung, wohingegen die vertikale Achse die ausgekoppelte Leistung repräsentiert. Die gezeigte Hysteresekurve kann mit einem Leistungsmessgerät oder einer Photodiode gemessen werden und das erste Signal $\mu$ ist in diesem Beispiel somit das Ergebnis einer Ein-Photonen-Detektion. Die gestrichelte Kurve stellt das ansteigende Verhalten 1 des Lasers beim Übergang vom Einfachpulszustand SP zum Doppelpulszustand DP dar. Die durchgezogene Linie entspricht dem abfallenden Verhalten 2 des Lasers beim Übergang vom Doppelpulszustand DP zum Einfachpulszustand SP. Die in Gleichung (1) ausgedrückte Beziehung gilt für beide Regimes, wobei zu beachten ist, dass sich der Gain-Sättigungsgrad bei Übergängen wegen einer Verlagerung der dynamischen Verluste im Resonator leicht ändert, was zu der dargestellten Hysterese führt. Ein möglicher Arbeitspunkt AP des Ultrakurzpulslasers kann knapp unterhalb der Hysterese gewählt werden.

Fig.3 zeigt die Darstellung von Einzel- und Doppelpulszustand mit Hysteresezyklen für Ein- und Zwei-Photonendetektion. Erfindungsgemäss wird zur Erkennung von Doppelpulsen ein zweites Signal $\nu$ einer Pulsspitzenleistung oder Pulsspitzenintensität aufgenommen, was beispielsweise mit einer zweiten Photodiode realisierbar ist, welche Zwei-Photonen-Absorption zeigt, jedoch keine Ein-Photonen Absorption. Das Zwei-Photonen-Signal 4 als zweites Signal $\nu$ verhält sich bei den Zustandsübergängen anders als das Ein-Photonen-Signal 3 als erstes Signal $\mu$, da die Spitzenleistung bzw. Spitzenintensität ein entscheidendes Kriterium für das Signal ist. Effektiv verringert sich die zum Zwei-Photonen-Signal 4 beitragende Spitzenleistung bzw. Spitzenintensität beim Übergang vom Einzel- in den Doppelpulszustand, wohingegen sich die Ein-Photonenenergie oder -Leistung, d.h. Durchschnittsleistung des Lasers, erhöht. Dieser Unterschied, d. h. die Auswertung beider Signale - Ein-Photon- und Zwei-Photon-Signal - ermöglicht es, die Betriebzustände des Lasers eindeutig und instantan anhand eines Vergleichs der gemessenen Signale $\mu$ und $\nu$ zu erkennen.

Eine als Detektor einsetzbare Photodiode wird in der Regel im Ein-Photonen-Regime betrieben, dies bedeutet, dass ein Photon mit einer Energie größer als die der Bandkante im PN-Übergang absorbiert wird und dadurch ein Elektron-Loch-Paar erzeugt. Durch die angelegte Vorspannung oder das eingebaute Potential des PN-Übergangs kommt es zum Stromfluss, falls die Photodiode mit einem geeigneten Widerstand abgeschlossen ist. Dieser Strom ist linear abhängig von der einfallenden Leistungsdichte. Falls die Photonenenergie geringer ist als die der Bandkante, gibt es keine lineare Absorption und es entsteht kein Photostrom. Andererseits besteht die Möglichkeit durch die Kaskadierung zweier Photonen über ein virtuelles Niveau ein Elektron-Loch-Paar zu erzeugen. Dieser Prozess ist zwar aufgrund der Kurzlebigkeit des virtuellen Niveaus sehr unwahrscheinlich, kann aber durch geeignet hohe Leistungsdichten verstärkt werden. Diese sog. 2-Photonen Absorption ist proportional zum Quadrat der Leistungsdichte, was bspw. in R. L. Sutherland, "Handbook of Nonlinear Optics", Marcel Dekker, 1996, Seite 498 erläutert wird.

Wie bereits erläutert emittiert der Laser im Doppel- oder Mehrfachpulszustand DP/MP zwar eine etwas höhere Durchschnittsleistung, jedoch ist aufgrund der Gleichung (1) die gesamte zum Zwei-Photonen Photostrom beitragende Spitzenleistung um einiges geringer als im Einzelpulszustand SP. Da die Zwei-Photonen-Detektion quadratisch von der Intensität abhängt, ist somit ein geringeres Signal als im Einzelpulszustand SP zu erwarten. Bei einem Übergang vom Einzelpulszustand SP zum Doppel-oder Mehrfachpulszustand DP/MP ist deshalb im Ein-Photonen-Signal ein positiver Sprung und im Zwei-Photonen-Signal ein negativer Sprung zu erwarten, was wie folgt veranschaulicht werden kann.

Der Einfachheit halber wird die Leistungshysterese vernachlässigt und angenommen, dass ein Laser einen Einzelpuls als Soliton, $\mathrm{sech}^2(t)$ mit Pulsdauer $\tau_{FWHM}=1.763 \cdot t_0$ und Energie E emittiert. Durch eine geringfügige Parameteränderung, z. B. durch Veränderung des Pumpstroms etc., wechselt der Laser nun in den Doppelpulszustand DP. Aufgrund von Gleichung (1) ist das Zwei-Photonen Signal für beide Fälle folglich.

$$\nu_1 \propto \int \left( \frac{E}{2t_0} \cdot \mathrm{sech}^2\left(\frac{t}{t_0}\right) \right)^2 dt \quad \mathrm{bzw.} \quad \nu_2 \propto \int 2 \cdot \left( \frac{E}{8t_0} \cdot \mathrm{sech}^2\left(\frac{t}{2t_0}\right) \right)^2 dt = \frac{\nu_1}{4} \qquad (2)$$

Allgemein ist das Zwei-Photonen Signal im Fall des Mehrfachpulszustands folglich:

$$v_n \propto \int n \cdot \left( \frac{E}{2n^2 t_0} \cdot \mathrm{sech}^2 \left( \frac{t}{nt_0} \right) \right)^2 dt = \frac{v_1}{n^2}$$

$$(3)$$

In der Realität und unter Berücksichtigung der Leistungserhöhung beim Übergang wird der erwartete Unterschied bei den Zwei-Photonensignalen geringer als Faktor $n^2$ ausfallen.

Exemplarisch wurde der Hysteresezyklus eines High-Q-Laser *femtoTRAIN 2000 1040nm 20MHz* mit Ein-Photon und Zwei-Photonen-Detektion gemessen, was zum in Fig.3 dargestellten Verlauf führt. Um eine höhere Intensität zu erzeugen, wurde ca. 1% der Ausgangsleistung auf die Photodiode *Hamamatsu G1116* GaAsP-Photodiode fokussiert. Letztere hat keine lineare Absorption bei der Laserwellenlänge von 1040nm, jedoch besteht bei dieser Wellenlänge schon ein ausreichender und nützlicher Zwei-Photonen Wirkungsquerschnitt. Die Elektronik besteht aus dem in Fig.4 dargestellten einfachen Verstärker.

Die Hysteresemessungen sind Fig.3 dargestellt, wobei die gestrichelte Linie das Ein-Photonen-Signal 3 und die durchgezogene Linie das Zwei-Photonen-Signal 4 repräsentieren. Hierbei wurde das Zwei-Photonen-Signal 4 so skaliert, dass sich dieses für den Einzelpulszustand SP so gut wie möglich mit dem entsprechenden Ein-Photonen-Signal 3 deckt. Die Kurven können in verschiedene Bereiche eingeteilt werden: die untere Linie des Ein-Photonen-Signals 3 und die obere Linie des Zwei-Photonen-Signals 4 repräsentieren den Einzelpulszustand SP. Die obere Linie des Ein-Photonen-Signals 3 und die untere Linie des Zwei-Photonen-Signals 4 entsprechen dem Doppelpulszustand -DP. Als ein hinreichend einfaches und eindeutiges Kriterium, die Pulszustände zu unterscheiden, kann festgelegt werden, dass bei einem Verhältnis von $|\mu\text{-}v|\leq1$ auf einen Einzelpulszustand geschlossen wird, wohingegen ein Verhältnis von $|\mu\text{-}v|\geq1.5$ als Indikator für einen Doppel-oder Mehrfachpulszustand DP/MP betrachtet wird. Eine Auswertung der beiden Signale mittels einer einfachen Software-Routine kann dann zwischen den beiden Zuständen (SP oder DP/MP) unterscheiden.

Im allgemeinen ist der Übergang eines Lasers aus einem Pulszustand mit n Pulsen in den nächsthöheren Pulszustand mit (n+1) Pulsen mithilfe des Leistungssprungs sichtbar. Zwischen Mehrfachpulszuständen mit n Pulsen und (n+1)Pulsen erhöht sich die Durchschnittsleistung und verlängert sich die Pulsdauer. Die Differenzierung zwischen Mehrfachpulszuständen nMP und (n+1)MP kann durch ein ähnliches wie vorher beschriebenes Kriterium für n=1 geleistet werden. Die Grenzwerte der Unterschieds $|\mu\text{-}v|$ für beide Zustände werden experimentell bestimmt. Z.B. ist der Dreifachpulszustand mit dem Verhältnis $|\mu\text{-}v|\geq2,5$ charakterisiert, wohingegen der Doppelpulszustand mit dem Verhältnis $1,5\leq|\mu\text{-}v|$ definiert ist. Alle möglichen Pulszustände können folglich mittels einer Routine unterschieden werden.

In Hinblick auf die Detektoren ist es möglich, die Funktionalität des ersten und zweiten Laserdetektor als unterschiedliche Betriebszustände einer Photodiode auszubilden, so dass mit nur einer Photodiode nacheinander mit Ein- und Zwei-Photonen-Absorption gemessen wird, d.h. das erste Signal $\mu$ wird in bekannter Weise und das zweite Signal $v$ mittels Zwei- oder Multiphotonen-Absorption gemessen.

Eine weitere Möglichkeit der Zwei-Photonen oder Multi-Photonen Detektion bestehen z. B. in der Nutzung von LEDs oder Photowiderständen mit Multi-Photoneneffekt. Die Antwort dieser Bauteile auf das ankommenden Signal hängt von der Spitzintensität ab: je höher die Intensität, desto grösser das Signal. Eine Messung dieses Signals im Vergleich zur Laserleistung erlaubt ebenfalls eine Bestimmung des Betriebszustands.

Die Messung der Zwei- oder Multi-Photonen-Absorption kann ebenfalls in Transmission, z. B. mit InP als Zwei-Photonenabsorber, erfolgen. Da die Absorption von der Spitzenleistung des Pulses abhängt, genügt es, die transmittierte, d.h. durchgeschaltete Leistung zu messen. Wenn die Leistung hoch ist, befindet sich der Laser im Doppel- bzw. Mehrfachpulszustand DP/MP.

Eine Alternative zur Aufnahme eines zweiten Signals $v$ besteht in der Verwendung einer Frequenzvervielfachung, insbesondere -verdoppelung oder -verdreifachung. Solche Vervielfachungsmethoden nutzen Kristalle wie z.B. BBO (Bariumborat), LBO (Lithium-Triborat), PPLN (periodisch gepoltes Lithiumniobat) oder KTP (Kaliumtitanylphosphat). Die Signalverhältnisse bei SP, DP/MP Übergängen entsprechen dabei denen der Zwei-Photonen Absorption. Da beim Doppel-oder Mehrfachpulszustand DP/MP die Spitzintensität geringer ist, wird das Vervielfachungssignal niedriger als im Einzelpulszustand, wobei die Detektion bspw. mit einem Powermeter ausgeführt werden kann. Das Verhältnis zwischen Einzelpulszustand SP und Doppel- oder Mehrfachpulszustand DP/MP ist ¼ bzw. $1/n^2$.

Die Erkennung des Betriebszustandes erlaubt eine Bereitstellung von Verfahren zur Vermeidung von Multipuls-Zuständen und zur Einstellung oder Optimierung des Laser-Arbeitspunktes.

Eine mögliche Kalibrierroutine stellt sich dabei wie folgt dar

- Der Laser ist temperiert und optimal justiert.
- Zur Bestimmung des Überganges von Einzelpulszustand SP zum Doppel- oder Mehrfachpulszustand DP/MP wird der Laser gezielt in den Doppel- oder Mehrfachpulszustand DP/MP versetzt. Hierzu wird die Pumpleistung bis zum erlaubten Maximum erhöht

- Beginnend mit dem Doppel- oder Mehrfachpulszustand DP/MP wird nun ein Ausschnitt der Leistungs-Betriebsstrom-Kurve gemessen, indem der Betriebsstrom für die Pumpquelle schrittweise, beispielsweise in 0,5A-Schritten, verringert wird.
- Es werden die MP-DP-SP-Übergänge aufgrund der gemessenen Signale |μ-ν| beobachtet. Nach Feststellung des DP-SP-Überganges kann der für diesen Übergang gefundene Betriebsstrom als Arbeitspunktstrom definiert werden. Dieser Betriebsstromwert bzw. die gemessene Leistung ist der vorerst ermittelte Arbeitspunkt AP.
- Die Stabilität des gefundenen AP kann durch mehrmaliges Ein-Ausschalten verifiziert werden. Es darf bei mehreren Ein-Ausschaltvorgängen (beispielsweise 5-10 Zyklen, jeweils ca. 10 Sekunden) kein Doppel- oder Mehrfachpulszustand DP/MP auftreten.

Bei manchen Soliton-Lasern können die Betriebsparameter, bei welchen der Laser beim Einschalten in den modengekoppelten Betrieb fällt, aus verschiedenen Gründen relativ nahe an, beziehungsweise innerhalb, der SP-DP/MP-Hysterese liegen. In diesem Fall kann beispielsweise eine Stromrampe als Verfahren zum Einschalten des Lasers gewählt werden.

- Der Laser wird mit erhöhtem Strom eingeschaltet. Zusätzlich kann der moden-gekoppelte Betrieb durch eine weitere Parameteränderung (Dispersion, akustische Störung, etc...) angeregt werden. Dies versetzt ihn in den modengekoppelten Doppel- oder Mehrfachpulszustand DP/MP. Der erhöhte Betriebsstrom wird für einige Sekunden gehalten.
- Danach wird der Betriebsstrom langsam auf einen Wert erniedrigt, welcher unterhalb des DP-SP-Übergangs liegt, was den Laser in den modengekoppelten Einpulszustand SP versetzt. Der erniedrigte Betriebsstrom wird für einige Sekunden gehalten.
- Danach wird der Betriebsstrom wiederum langsam auf den Nennwert gebracht, welcher u. U. innerhalb der SP-DP/MP-Hysterese liegen kann.

Fig.4 zeigt die schematische Darstellung einer einfachen Verstärkerschaltung zur Zwei-Photonen-Detektion mit zwei 100kΩ-Widerständen 4, einem 1 MΩ-Widerstand 5, drei 470pF-Kondensatoren 6, einer Hamamatsu G1116 GaAsP-Photodiode 7 und einem Operationsverstärker 8, wobei VCC die Versorgungsspannung bezeichnet.

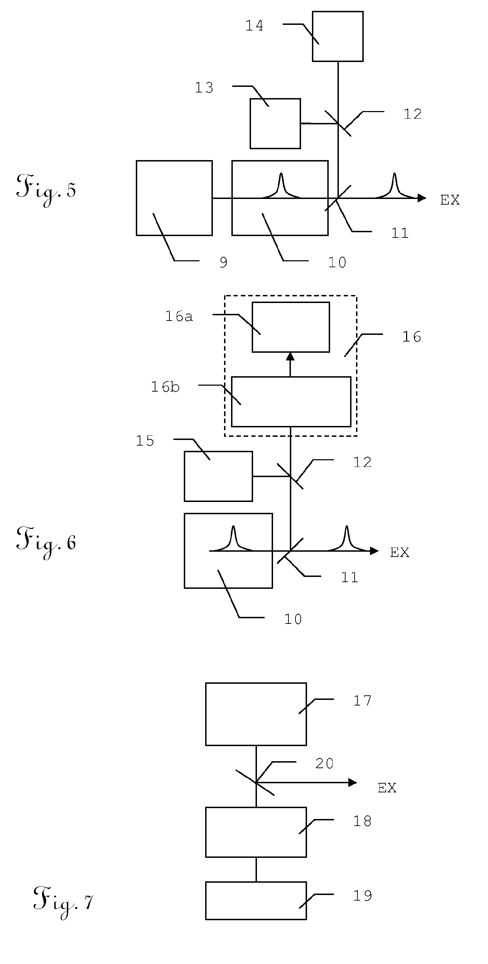

In Fig.5 wird eine erste Ausführungsform einer erfindungsgemässen Anordnung mit zwei Laserdetektoren näher erläutert, wie sie beispielsweise mit bzw. in einem im Solitonenregime betreibbaren Ultrakurzpulslasersystem zur Erzeugung von Femto- oder Pikosekundenpulsen verwendet werden kann. Solche Lasersysteme weisen einen Oszillator 10 als Laserresonator mit mindestens einem Resonatorspiegel, einem verstärkenden Lasermedium zur Erzeugung einer Laseremission und mit einer zugeordneten Pumpquelle 9, insbesondere eine Laserdiodenquelle, zum Pumpen des Lasermediums auf. Über einen Umlenkspiegel 11, der inner-oder ausserhalb des Oszillators 10 bzw. der Kavität angeordnet sein kann, wird Laserlicht ausgekoppelt und auf einen Teilerspiegel 12 geführt. Hierbei bezeichnet EX den Ausgang des Lasersystems. Dem Teilerspiegel sind ein erster Laserdetektor 13 und ein zweiter Laserdetektor 14 nachgeordnet, wobei der erste Laserdetektor 13 zur Messung von Pulsdurchschnittsleistung oder Pulsenergie für einen oder mehrere Pulse ausgelegt ist. Der erste Laserdetektor 13 kann dabei eine im Ein-Photon-Absorptions-Regime betriebene Photodiode sein.

Der zweite Laserdetektor 14 ist zur Messung von Pulsspitzenleistung oder Pulsspitzenintensität für einen oder mehrere Pulse ausgebildet, wobei hier eine Auswertekomponente zur Erkennung des Auftretens eines Doppel- oder Mehrfachpulszustands (DP/MP) anhand eines Vergleichs der gemessenen Signale von erstem und zweitem Laserdetektor aus Anschaulichkeitsgründen nicht dargestellt ist. Der zweite Laserdetektor 14 kann als eine im Zwei-oder Multiphotonen-Absorptions-Regime betriebene Photodiode realisiert werden.

Eine Verwendung von Ein- und Multiphotonen-Absorptions-Regimes erlaubt auch die Realisierung der Funktionalität von zwei getrennten Laserdetektoren durch verschiedene Modi, d.h. der erste und zweite Laserdetektor 13,14 werden durch bzw. als unterschiedliche Betriebszustände einer Photodiode verwirklicht.

Der zweite Laserdetektor 14 kann jedoch auch eine LED oder ein Photowiderstand mit Zwei- oder Multi-Photoneneffekt sein oder mit InP zur 2-Photonen Absorption in Transmission versehen werden.

Eine zweite Ausführungsform einer erfindungsgemässen Anordnung mit zwei Laserdetektoren wird in Fig.6 dargestellt. Nach Auskopplung aus dem Oszillator 10 über einen Umlenkspiegel 11 wird das Laserlicht durch einen Teilerspiegel 12 auf einen Leistungsmesser 15 als ersten Detektor und einen Leistungsmesser 16a mit einer Komponente 16b zur Frequenzverdopplung oder Frequenzvervielfachung geführt, die somit in dieser Kombination den zweiten Detektor 16 bilden. Zur Realisierung der spezifischen Funktionalität des zweiten Laserdetektors 16 wird damit vor einen grundsätzlich mit dem Leistungsmesser 15 als erstem Detektor identisch bzw. gleichartig auslegbaren Leistungsmesser 16a eine zusätzliche funktionale Komponente 16b geschaltet, z.B. wenigstens ein BBO-, LBO-, PPLN- oder KTP-Kristall.

Weitere Detektorkonzepte zur Erkennung von Doppel- oder Mehrfachpulszustände können mit dem erfindungsgemässen Ansatz mit zwei Detektoren kombiniert werden bzw. diese ergänzen oder diese unter Umständen ersetzen. Diese werden in den Fig.7 bis 9a-b erläutert. Dabei sind sie jedoch grundsätzlich unabhängig vom erfindungsgemässen Zwei-Detektor-Ansatz.

Fig.7 zeigt hierbei eine erste alternative oder ergänzende Ausführungsform zur erfindungsgemässen Anordnung mit einem sättigbarem Absorber 18. Aus dem Lasersystem 17 wird Laserlicht über einen Umlenkspiegel 20 zum Ausgang EX geführt. Der strahlteilend ausgelegte Umlenkspiegel lässt einen Teil des Lichts über einen sättigbaren Absorber 18 auf einen Laserdetektor 19 fallen. Dieser misst die Transmission durch den schnellen sättigbaren Absorber 18, wobei dieser beispielsweise einen Quantum-Well-Absorber, darstellen bzw. aufweisen kann, wie z.B. InGaAs zwischen GaAs oder anderen Materien mit geeigneten Energielücken. Dieser zeigt ein intensitätsabhängiges Sättigungsverhalten, so daß ebenfalls eine Differenzierung der unterschiedlichen Pulszustände realisierbar ist. Das sättigbare Material absorbiert die ankommende Energie und lässt bei erfolgter Sättigung die Pulse durch. Dabei hängt die Sättigung von der Pulsdauer und der Pulsintensität ab. Die geeignete Wahl des sättigbaren Absorbers ermöglicht es, die Pulse im Einzelpulszustand SP stärker durchzulassen und im Doppel- bzw. Mehrfachpulszustand DP/MP eher zu blockieren, so dass anhand der durchgelassenen Leistung der Betriebszustand des Lasers bestimmt werden kann. Wie die folgende Rechnung zeigt, ist dabei der Signalkontrast zwischen beiden Zuständen im nicht gesättigten Betrieb des sättigbaren Materials größer als im gesättigten Betrieb.

Die intensitätsabhängige Transmission kann wie folgt geschrieben werden

$$T(I) = 1 - \frac{A_0}{1 + \dfrac{I}{I_{Sat}}} \qquad\qquad (4)$$

wobei $I_{Sat}$ die Sättigungsintensität und $A_0$ das Absorptionsvermögen bezeichnen. Für den gesättigten Zustand mit $I=I_{Sat}$ und $A_0=1$ folgen

$T(I_{SP})=0{,}5$
$T(I_{DP})=2 \cdot T(I_{SP}/4)=0{,}4$
$T(I_{SP})/T(I_{DP})=1{,}25$

wohingegen für einen ungesättigten Zustand mit $I=0{,}1\ I_{Sat}$ und $A_0=1$ ein im Vergleich höherer Signalkontrast $T(I_{SP})/T(I_{DP})$ folgt

$T(I_{SP})=0{,}091$
$T(I_{DP})=2 \cdot T(I_{SP}/4)=0{,}049$
$T(I_{SP})/T(I_{DP})=1{,}86$

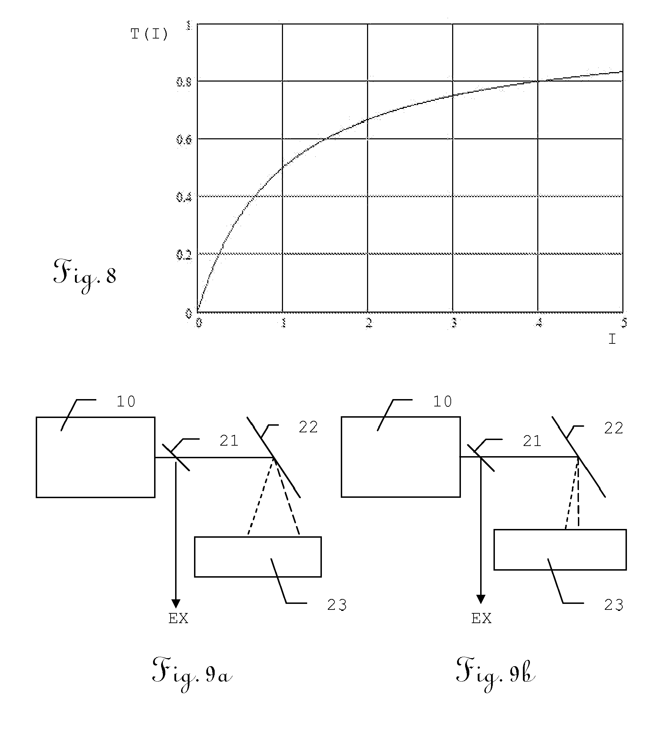

Fig.8 zeigt beispielhaft den Verlauf der Transmission T(I) durch einen schnellen sättigbaren Absorber in Abhängigkeit von der normierten Intensität $I/I_{sat}$ vor dem Absorber.

Eine zweite alternative oder ergänzende Ausführungsform zur erfindungsgemässen Anordnung mit spektraler Pulsanalyse wird in Fig.9a-b schematisch näher erläutert. Diese weitere Alternative zur Erkennung des Pulszustands besteht in der Verwendung der spektralen Auflösung der Pulse. Im Doppel-oder Mehrfachzustand DP/MP ist der Puls zeitlich länger, aber auf der anderen Seite ist seine spektrale Bandbreite geringer als im Einzelpulszustand SP. Der Vergleich der spektralen Bandbreiten mit z.B. einem Spektrometer erlaubt, den Laserzustand zu bestimmen. Um Doppeldeutigkeiten zu vermeiden, ist es möglich, auch die Laserleistung zu messen und beide Messungen auszuwerten. Beispielsweise kann der aus dem Oszillator 10 über einen Auskoppelspiegel 21 stammende Puls auf ein nachfolgendes Gitter 22 geführt und der Puls räumlich zerlegt werden. Danach erlaubt beispielsweise eine CMOS- oder CCD-Kamera 23 oder einem anderer optischer Detektor die Aufnahme des entstandenen Flecks. Anhand der Fleckgrösse oder mittels einer Apertur und einem Leistungsmessgerät können dann die SP und DP Zustände unterschieden werden. Der Fall des Einzelpulszustands SP mit breiterem Spektrum bzw. Fleck ist dabei in Fig.9a und der Fall des Doppel- oder Mehrfachzustand DP/MP mit demgegenüber schmalerem Spektrum bzw. Fleck in Fig.9b dargestellt.

Es versteht sich, dass die gezeigten Anordnungen rein beispielhafte Ausführungsformen darstellen und Komponenten auch an anderer Stelle angeordnet sein oder auch je nach konkreter Auslegung auch weggelassen werden können, wie z.B. Teiler- oder Auskoppelspiegel. Auch können die in Fig.7 bis 9a-b dargestellten Ausführungsformen auch als zweiter Detektor mit einem ersten Detektor des erfindungsgemässen Ansatzes kombiniert werden.

**Patentansprüche**

1. Erkennungsverfahren für Doppel- oder Mehrfachpulszustände (DP/MP) in einem Ultrakurzpulslasersystem zur Erzeugung von Femto- oder Pikosekundenpulsen mit mindestens

   • einem verstärkenden Lasermedium zur Erzeugung einer Laseremission,
   • einem Laserresonator (10) mit mindestens einem Resonatorspiegel und
   • einer Pumpquelle (9), insbesondere eine Laserdiodenquelle, zum Pumpen des Lasermediums,

   wobei das Ultrakurzpulslasersystem im Solitonenregime betrieben und für die Laseremission ein erstes Signal $\mu$ einer Pulsdurchschnittsleistung, instantanen Leistung oder Pulsenergie für einen oder mehrere Pulse gemessen wird,
   **dadurch gekennzeichnet, dass**
   für die Laseremission ein zweites Signal $\nu$ einer Pulsspitzenleistung oder Pulsspitzenintensität für einen oder mehrere Pulse gemessen wird und das Auftreten eines Doppel- oder Mehrfachpulszustands (DP/MP) anhand eines Vergleichs der gemessenen Signale $\mu$ und $\nu$ erkannt wird.

2. Erkennungsverfahren nach Anspruch 1,
   **dadurch gekennzeichnet, daß**
   das erste Signal $\mu$ mittels Ein-Photon-Absorption gemessen wird.

3. Erkennungsverfahren nach Anspruch 1 oder 2,
   **dadurch gekennzeichnet, daß**
   das zweite Signal $\nu$ mittels Zwei- oder Multiphotonen-Absorption gemessen wird.

4. Erkennungsverfahren nach Anspruch 1 oder 2,
   **dadurch gekennzeichnet, daß**
   das zweite Signal $\nu$ unter Verwendung einer Frequenzvervielfachung, insbesondere -verdoppelung oder -verdreifachung, gemessen wird.

5. Erkennungsverfahren nach einem der vorangehenden Ansprüche,
   **dadurch gekennzeichnet, daß**
   bei einem Verhältnis von $|\mu-\nu|\leq1$ auf einen Einzelpulszustand (SP) geschlossen wird, wobei beide Signale $\mu$ und $\nu$ in einem Zustand mit definierter Einzelpulscharakteristik so kalibriert werden, daß sie sich im wesentlichen entsprechen.

6. Erkennungsverfahren nach einem der vorangehenden Ansprüche,
   **dadurch gekennzeichnet, daß**
   bei einem Verhältnis von $|\mu-\nu|\geq1.5$ auf einen Doppel-oder Mehrfachpulszustand (DP/MP) geschlossen wird, wobei beide Signale $\mu$ und $\nu$ in einem Zustand mit definierter Einzelpulscharakteristik so kalibriert werden, daß sie sich im wesentlichen entsprechen.

7. Verfahren zur Vermeidung von Doppel- oder Mehrfachpulszuständen (DP/MP) und Optimierung des Laser-Arbeitspunktes (AP) mit einem Erkennungsverfahren nach einem der vorangehenden Ansprüche,
   **gekennzeichnet durch**

   o ein Versetzen des Ultrakurzpulslasersystems in den Doppel- oder Mehrfachpulszustand (DP/MP),
   o ein Verringern des Betriebsstroms für die Pumpquelle zur Ableitung der Abhängigkeit der Signale $\mu$ und $\nu$ vom Betriebsstrom,
   o ein Bestimmen des Betriebsstromendwertes für den Übergang vom Doppel- oder Mehrfachpulszustands (DP/MP) in den Einzelpulszustand (SP).

8. Verfahren nach Anspruch 7,
   **dadurch gekennzeichnet, daß**
   nach dem Verringern des Betriebsstroms ein Erhöhen bis zum Betriebsstromendwert erfolgt.

9. Messvorrichtung zur Erkennung von Doppel- oder Mehrfachpulszustände (DP/MP) in einem im Solitonenregime betreibbaren Ultrakurzpulslasersystem zur Erzeugung von Femto- oder Pikosekundenpulsen;

mit mindestens einem ersten Laserdetektor (13,15) zur Messung von Pulsdurchschnittsleistung oder Pulsenergie für einen oder mehrere Pulse,

**gekennzeichnet durch**

einen zweiten Laserdetektor (14,16) zur Messung von Pulsspitzenleistung oder Pulsspitzenintensität für einen oder mehrere Pulse und eine Auswertekomponente zur Erkennung des Auftretens eines Doppel- oder Mehrfachpulszustands (DP/MP) anhand eines Vergleichs der gemessenen Signale von erstem und zweitem Laserdetektor (13,14,15,16).

**10.** Messvorrichtung nach Anspruch 9,
**dadurch gekennzeichnet, dass**
der erste Laserdetektor (13,15) eine im Ein-Photon-Absorptions-Regime betriebene Photodiode ist.

**11.** Messvorrichtung nach Anspruch 9 oder 10,
**dadurch gekennzeichnet, dass**
der zweite Laserdetektor (14,16) eine im Zwei- oder Multiphotonen-Absorptions-Regime betriebene Photodiode (7) ist.

**12.** Messvorrichtung nach Anspruch 10 und 11,
**dadurch gekennzeichnet, dass**
der erste und zweite Laserdetektor als unterschiedliche Betriebszustände einer Photodiode ausgebildet sind.

**13.** Messvorrichtung nach Anspruch 9 oder 10,
**dadurch gekennzeichnet, dass**
der zweite Laserdetektor (14) eine LED oder ein Photowiderstand mit Zwei- oder Multi-Photoneneffekt ist.

**14.** Messvorrichtung nach Anspruch 9 oder 10,
**dadurch gekennzeichnet, dass**
der zweite Laserdetektor (16) wenigstens ein Element zur Frequenzvervielfachung aufweist, insbesondere einen BBO-, LBO-, PPLN- oder KTP-Kristall.

**15.** Messvorrichtung nach Anspruch 9 oder 10,
**dadurch gekennzeichnet, dass**
der zweite Laserdetektor (14) wenigstens ein Element zur 2-Photonen Absorption in Transmission aufweist, insbesondere InP.

**16.** Ultrakurzpulslasersystem zur Erzeugung von Femto- oder Pikosekundenpulsen mit mindestens

- einem verstärkenden Lasermedium zur Erzeugung einer Laseremission,
- einem Laserresonator (10) mit mindestens einem Resonatorspiegel,
- einer Pumpquelle (9), insbesondere eine Laserdiodenquelle, zum Pumpen des Lasermediums und
- einer Messvorrichtung nach einem der Ansprüche 10 bis 15.

Fig. 1

Fig. 2

Fig. 3

Fig. 4

Fig. 5

Fig. 6

Fig. 7

T(I)

*Fig.* 8

Fig. 9a                    Fig. 9b

**Europäisches
Patentamt**

**EUROPÄISCHER RECHERCHENBERICHT**

Nummer der Anmeldung

EP 07 11 2992

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | LAI M ET AL: "Multiple pulse operation of a femtosecond Ti:sapphire laser" OPTICS COMMUNICATIONS, NORTH-HOLLAND PUBLISHING CO. AMSTERDAM, NL, Bd. 142, Nr. 1-3, 1. Oktober 1997 (1997-10-01), Seiten 45-49, XP004094041 ISSN: 0030-4018 | 1,2,4,9, 10,14,16 | INV. H01S3/00 H01S3/131 ADD. H01S3/0941 H01S3/102 |
| Y | * Seite 45, linke Spalte - Seite 47, linke Spalte; Abbildungen 1,2 * ----- | 3,7,8, 11-13,15 | |
| X | BUIJSERD A N ET AL: "CPM laser with electronic feedback" MEASUREMENT SCIENCE AND TECHNOLOGY, INSTITUTE OF PHYSICS PUBLISHING, BRISTOL, GB, Bd. 1, Nr. 8, 1. August 1990 (1990-08-01), Seiten 751-753, XP020066282 ISSN: 0957-0233 | 1,2,4, 7-10,14, 16 | |
| Y | * Seite 751, rechte Spalte - Seite 752, rechte Spalte; Abbildungen 1,2,4 * ----- | 3,11-13, 15 | RECHERCHIERTE SACHGEBIETE (IPC) |
| X | US 6 693 927 B1 (HORVATH CHRISTOPHER [US] ET AL) 17. Februar 2004 (2004-02-17) | 1-4, 7-10,14, 16 | H01S G01J |
| Y | * Spalte 1, Zeilen 8-44; Abbildungen 1,2 * * Spalte 3, Zeile 25 - Spalte 5, Zeile 29 * ----- | 5-8, 11-13,15 | |
| X | US 2003/138006 A1 (HOLSINGER KEVIN [US]) 24. Juli 2003 (2003-07-24) | 1,2,4-6, 9,10,14, 16 | |
| Y | * Absätze [0006] - [0009], [0030] - [0043]; Abbildungen 2,3 * ----- -/-- | 3,5-8, 11-13,15 | |

Der vorliegende Recherchenbericht wurde für alle Patentansprüche erstellt

| Recherchenort | Abschlußdatum der Recherche | Prüfer |
|---|---|---|
| München | 28. November 2007 | Laenen, Robert |

EPO FORM 1503 03.82 (P04C03)

**Europäisches Patentamt**

**EUROPÄISCHER RECHERCHENBERICHT**

Nummer der Anmeldung

EP 07 11 2992

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | REID DT ET AL: "Light-emitting diodes as measurement devices for femtosecond laser pulses" OPTICS LETTERS, OSA, OPTICAL SOCIETY OF AMERICA, WASHINGTON, DC, US, Bd. 22, Nr. 4, 15. Februar 1997 (1997-02-15), Seiten 233-235, XP007902668 ISSN: 0146-9592 * das ganze Dokument * ----- | 3,11-13, 15 | |
| Y | KIKUCHI K: "Highly sensitive interferometric autocorrelator using Si avalanche photodiode as two-photon absorber" ELECTRONICS LETTERS, IEE STEVENAGE, GB, Bd. 34, Nr. 1, 8. Januar 1998 (1998-01-08), Seiten 123-125, XP006009086 ISSN: 0013-5194 * das ganze Dokument * ----- | 3,11,15 | |
| A | US 5 007 717 A (CUTOLO ANTONELLO [IT] ET AL) 16. April 1991 (1991-04-16) * Spalte 2, Zeile 30 - Spalte 4, Zeile 17; Abbildung 1 * ----- | 1,2,4,9, 10,14,16 | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| München | 28. November 2007 | Laenen, Robert |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 07 11 2992

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-11-2007

| Im Recherchenbericht angeführtes Patentdokument | | Datum der Veröffentlichung | Mitglied(er) der Patentfamilie | | Datum der Veröffentlichung |
|---|---|---|---|---|---|
| US 6693927 | B1 | 17-02-2004 | AU | 2003265690 A1 | 30-04-2004 |
| | | | CA | 2466960 A1 | 25-03-2004 |
| | | | CN | 1592993 A | 09-03-2005 |
| | | | EP | 1464097 A1 | 06-10-2004 |
| | | | JP | 2005539380 T | 22-12-2005 |
| | | | KR | 20050035516 A | 18-04-2005 |
| | | | WO | 2004025792 A1 | 25-03-2004 |
| US 2003138006 | A1 | 24-07-2003 | KEINE | | |
| US 5007717 | A | 16-04-1991 | KEINE | | |

EPO FORM P0461

Für nähere Einzelheiten zu diesem Anhang : siehe Amtsblatt des Europäischen Patentamts, Nr.12/82

**EP 2 019 461 A1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- *J. Opt. Soc. Am.,* 1999, vol. 16, 895-904
- **G. P. AGRAWAL.** Nonlinear Fiber Optics. Academic Press, 1989, 114
- **R. L. SUTHERLAND.** Handbook of Nonlinear Optics. Marcel Dekker, 1996, 498